# EUROPÄISCHE PATENTSCHRIFT

(11) **EP 3 516 416 B1**
(45) Veröffentlichungstag und Bekanntmachung des Hinweises auf die Patenterteilung: **25.03.2020**
(21) Anmeldenummer: 17822291.5
(22) Anmeldetag: 21.12.2017
(51) Int. Cl.: G01S 13/93, H01Q 1/42, H01Q 1/44, H01Q 21/29

(54) **RADARANORDNUNG FÜR EIN KRAFTFAHRZEUG UND KRAFTFAHRZEUG**
RADAR ARRANGEMENT FOR A MOTOR VEHICLE, AND MOTOR VEHICLE
SYSTÈME RADAR POUR VÉHICULE AUTOMOBILE ET VÉHICULE AUTOMOBILE

(30) Priorität: 10.01.2017 DE 102017200273
(43) Veröffentlichungstag der Anmeldung: 31.07.2019
(73) Patentinhaber: Audi AG, 85045 Ingolstadt (DE)
(72) Erfinder: KHLIFI, Rachid, 85748 Garching (DE)
(86) Internationale Anmeldenummer: PCT/EP2017/084099
(87) Internationale Veröffentlichungsnummer: WO 2018/130402

(56) Entgegenhaltungen:
- EP-A1- 2 293 382
- EP-A1- 2 966 725
- EP-A1- 3 001 221
- EP-A2- 0 954 052
- DE-A1-102014 009 861
- DE-A1-102014 105 271
- DE-B3-102007 039 897
- US-A1- 2016 282 450

## Beschreibung

Die Erfindung betrifft eine Radaranordnung für ein Kraftfahrzeug.

Die Verwendung von Radarsensoren in Kraftfahrzeugen ist im Stand der Technik bereits weitgehend bekannt, wobei beispielsweise aus DE 10 2014 105 271 A1 ein gattungsbildender Radarsensor für ein Kraftfahrzeug bekannt ist. Radarsensoren werden heutzutage meist als Umfeldsensoren für einen mittleren und größeren Distanzbereich eingesetzt, um andere Verkehrsteilnehmer oder größere Objekte in Distanz, Winkel und Relativgeschwindigkeit bestimmen zu können. Derartige Radardaten können in Umfeldmodelle eingehen oder auch unmittelbar Fahrzeugsystemen zur Verfügung gestellt werden. Nutzen aus Radardaten ziehen im bekannten Stand der Technik beispielsweise Längsführungssysteme, wie ACC, oder auch Sicherheitssysteme. Auch die Nutzung von Radarsensoren im Innenraum des Kraftfahrzeugs wurde bereits vorgeschlagen.

Radarsensoren herkömmlicher Bauart weisen meist eine größere Ausdehnung auf und sind eher klobig, nachdem die Antennen sowie die unmittelbar an der Antenne benötigten Elektronikkomponenten, also das Radar-Frontend, in einem Gehäuse integriert sind. Hauptsächlich bilden die Elektronikkomponenten dabei den Radar-Transceiver, der eine Frequenzsteuerung (üblicherweise umfassend eine Phasenregelschleife - PLL), Mischeinrichtungen, einem Low Noise Amplifier (LNA) und dergleichen enthält, oft werden jedoch auch Steuermodule und digitale Signalverarbeitungskomponenten antennennah realisiert, beispielweise um bereits aufbereitete Sensordaten, beispielsweise Objektlisten, auf einen angeschlossenen Bus, beispielsweise einen CAN-Bus, geben zu können.

Die Realisierung von Radarkomponenten auf Halbleiterbasis erwies sich lange Zeit als schwierig, da teure Spezialhalbleiter, insbesondere GaAs, benötigt wurden. Es wurden kleinere Radarsensoren vorgeschlagen, deren gesamtes Radar-Frontend auf einem einzigen Chip in SiGe-Technologie realisiert ist, ehe auch Lösungen in der CMOS-Technologie bekannt wurden. Solche Lösungen sind Ergebnis der Erweiterung der CMOS-Technologie auf Hochfrequenzanwendungen, was oft auch als RF-CMOS bezeichnet wird. Ein solcher CMOS-Radarchip ist äußerst kleinbauend realisiert und nutzt keine teuren Spezialhalbleiter, bietet also vor allem in der Herstellung deutliche Vorteile gegenüber anderen Halbleitertechnologien. Eine beispielhafte Realisierung eines 77 GHz-Radar-Transceivers als ein CMOS-Chip ist in dem Artikel von Jri Lee et al., "A Fully Integrated 77-GHz FMCW Radar Transceiver in 65-nm CMOS Technology", IEEE Journal of Solid State Circuits 45 (2010), S. 2746-2755, beschrieben.

Nachdem zudem vorgeschlagen wurde, den Chip und die Antenne in einem gemeinsamen Package zu realisieren, ist ein äußerst kostengünstiger kleiner Radarsensor möglich, der Bauraumanforderungen deutlich besser erfüllen kann und aufgrund der kurzen Signalwege auch ein sehr niedriges Signal-Zu-Rausch-Verhältnis aufweist sowie für hohe Frequenzen und größere, variable Frequenzbandbreiten geeignet ist. Daher lassen sich derartige, kleinbauende Radarsensoren auch für Kurzreichweiten-Anwendungen, beispielsweise im Bereich von 30 cm bis 10 m, einsetzen.

Es wurde auch bereits vorgeschlagen, einen solchen CMOS-Transceiver-Chip und/oder ein Package mit CMOS-Transceiver-Chip und Antenne auf einer gemeinsamen Leiterplatte mit einem digitalen Signalverarbeitungsprozessor (DSP-Prozessor) vorzusehen oder die Funktionen des Signalverarbeitungsprozessors ebenso in den CMOS-Transceiver-Chip zu integrieren. Eine ähnliche Integration ist für Steuerungsfunktionen möglich.

Heutzutage werden noch viele Radarsensoren des Kraftfahrzeugs, beispielsweise Radarsensoren für ein ACC-System, sichtbar am Kraftfahrzeug verbaut. Aus designtechnischen Gründen wird nach Möglichkeiten gesucht, Radarsensoren auch verdeckt zu verbauen. DE 10 2013 223 783 A1 legt hierzu dar, dass es bekannt sei, eine Platte oder flache Schale, auf der ein Emblem beziehungsweise ein Logo integriert ist, als Radom zu nutzen. Dabei soll eine Reinigung des Radoms erfolgen, indem Ultraschall verwendet wird. Der Vorteil einer Platzierung eines Radarsensors hinter einem Logo oder Emblem ist, dass diese meist auch mittig im vorderen oder hinteren Bereich des Kraftfahrzeugs angeordnet sind. Derartige mittige Positionen sind aufgrund der Symmetrie besonders geeignet, um den Radarsensor zu platzieren.

Bei der Trennfähigkeit zwischen unterschiedlichen Objekten in einer Verkehrssituation spielt die Winkelauflösung von Radarsensoren eine wichtige Rolle. Dabei hängt die Winkelauflösung eines Radarsensors im Wesentlichen von der Größe der Antennenanordnung ab. Je größer die effektive Länge der Antennenanordnung, die auch als Apertur bezeichnet wird, ist, umso höher ist auch die Winkelauflösung in dieser Richtung. Nachdem Radarsensoren in ihrer Größe begrenzt sind, kann die Antennenanordnung nur bis hin zu einer bestimmten Fläche, beispielsweise 10 cm x 10 cm, vergrößert werden. Diese Größenbegrenzung führt auch zu einer Größenbegrenzung der realisierbaren Winkelauflösung.

Der Erfindung liegt daher die Aufgabe zugrunde, eine Möglichkeit zur Verbesserung der Winkelauflösung von Radarsensoren in einem Kraftfahrzeug anzugeben.

Zur Lösung dieser Aufgabe ist bei einer Radaranordnung der eingangs genannten Art erfindungsgemäß vorgesehen, dass wenigstens zwei Antennenanordnungen in einem in einer Anordnungsrichtung definierten Abstand auf einem insbesondere für Radarstrahlung durchlässigen Trägerbauteil des Kraftfahrzeugs angeordnet sind und die Radaranordnung eine Steuereinrichtung zum gemeinsamen Sende- und Empfangsbetrieb der wenigstens zwei Antennenanordnungen durch kohärente Ansteuerung derart aufweist, dass diese wie eine einzige virtuelle Antennenanordnung mit vergrößerter Antennenausdehnung in der Anordnungsrichtung wirken, wobei jede Antennenanordnung einem eigenen Radarsensor zugeordnet ist, wobei die Radarsensoren in dem definierten Abstand auf dem Trägerbauteil befestigt sind, wobei die Antennenanordnung als Teil eines Halbleiter-Packages realisiert sind, das neben der jeweiligen Antennenanordnung einen Halbleiterchip, insbesondere einen CMOS-Chip, umfasst, der einen Radartransceiver realisiert. Erfindungsgemäß wird mithin vorgeschlagen, mehrere, insbesondere zwei, Antennenanordnungen zu verwenden, die in einem konstanten Abstand angeordnet sind. Hierzu werden die Antennenanordnungen an einem Trägerbauteil in dem gewollten definierten Abstand angeordnet. Der Vorteil einer solchen Nutzung eines Trägerbauteils ist, dass der Abstand zwischen den einzelnen Antennenanordnungen festgelegt ist. Dieser Abstand ist für eine Winkelmessung relevant. Dabei ist es besonders zweckmäßig, wenn der definierte Abstand ein ganzzahliges Vielfaches einer Wellenlänge der verwendeten Radarstrahlung beträgt. So kann beispielsweise vorgesehen sein, als definierten Abstand einen Wert von etwa 19,5 cm zu verwenden, wenn Radarstrahlung einer Frequenz von 77 GHz (mithin einer Wellenlänge von 3,9 mm) eingesetzt wird.

Durch die unterschiedliche Verortung der einzelnen Antennenanordnungen und eine kohärente Steuerung der beiden Antennenanordnungen kann eine virtuelle Antennenanordnung einer vergrößerten Antennenabmessung geschaffen werden, was wiederum zu einer erhöhten Winkelauflösung führen kann. Grundsätzlich ist eine kohärente Ansteuerung von Antennenanordnungen bekannt, siehe EP3001221.

Mit anderen Worten ist erfindungsgemäß eine Steuereinrichtung vorgesehen, die zur gemeinsamen Ansteuerung, beim Senden und/oder Empfangen, von Antennenelementen der Antennenanordnungen als Antennenelemente der virtuellen Antennenanordnung ausgebildet ist. Insbesondere ist ein simultaner beziehungsweise wenigstens zeitlich abgestimmter Sendebetrieb von Sende-Antennenelementen der Antennenanordnung möglich; gleiches gilt letztlich für von Empfangs-Antennenelementen der Antennenanordnungen empfangene Radarsignale, die einer gemeinsamen Auswertung zugeführt werden. Die wenigstens zwei definiert beabstandet positionierten Antennenanordnungen entsprechen dann im Wesentlichen einer virtuellen Antennenanordnung mit einer vergrößerten, virtuellen Apertur in wenigstens der Richtung, in der die Antennenanordnungen aufeinanderfolgen.

Dabei wird im Folgenden häufig das Beispiel von zwei Antennenanordnungen verwendet werden, so dass dann von einem Stereo-Radarsystem geredet werden kann. Die Erfindung lässt sich jedoch auch auf mehr als zwei Antennenanordnungen übertragen, insbesondere dann, wenn das Trägerbauteil eine Fläche zur Verfügung stellt, die durch mehr als zwei Antennenanordnungen zweckmäßig genutzt werden kann.

In diesem Kontext können auch besonders vorteilhaft die eingangs diskutierten neuen Entwicklungen in der Halbleitertechnologie für Radarsensoren genutzt werden, insbesondere im Hinblick auf kleinbauend zu realisierende Komponenten und eine hohe Qualität der Radardaten. Mithin ist erfindungsgemäß vorgesehen, dass die Antennenanordnungen als Teil eines Halbleiter-Packages realisiert sind, das neben der jeweiligen Antennenanordnung einen Halbleiterchip, insbesondere einen CMOS-Chip, umfasst, der einen Radartransceiver realisiert. Derartige Packages können auch als "Radarchips" bezeichnet werden. Durch den Halbleiterchip können zudem eine digitale Signalverarbeitungskomponente (DSP) und/oder eine Steuereinheit realisiert sein. Derartige Packages können kleinbauend und günstig realisiert werden, wobei jedes eines solchen Packages auch als eigener Radarsensor fungieren kann. Steuereinheiten solcher Packages, die durch den Halbleiterchip realisiert werden, können als Teil der Steuereinrichtung dienen.

Auch unabhängig von der soeben beschriebenen Verwendung der Halbleitertechnologie, besonders vorteilhaft jedoch unter Verwendung derselben, ist es erfindungsgemäß vorgesehen, dass jede Antennenanordnung einem eigenen Radarsensor zugeordnet ist, wobei die Radarsensoren in dem definierten Abstand auf dem Trägerbauteil befestigt sind. Auf diese Weise können letztlich fertige, komplette, insbesondere in Halbleitertechnologie realisierte Radarsensoren genutzt werden, ohne dass spezielle, zusätzliche Konstruktionen notwendig sind. Insbesondere Halbleiter-Radarsensoren bringen dabei eine gewisse Eigenintelligenz, insbesondere in Form der erwähnten Steuereinheit, bereits mit, so dass eine übergeordnete Steuerkomponente der Steuereinrichtung, diese Eigenintelligenz nutzend, vorgesehen werden kann, um die gemeinsame Ansteuerung der beabstandeten, jeweiligen Antennenanordnungen der Radarsensoren zu realisieren.

In einer Weiterbildung der Erfindung kann vorgesehen sein, dass die Antennenanordnungen auf einem gemeinsamen Substrat angeordnet sind. Dabei kann konkret vorgesehen sein, dass das Substrat auf einer Seite des Trägerbauteils aufgebracht ist oder eine an einer Seite oder innerhalb des Trägerbauteils befestigte Leiterplatte als Substrat verwendet wird. Über ein solches gemeinsames Substrat, insbesondere eine gemeinsame Leiterplatte, können mit besonderem Vorteil auch Steuerleitungen für die gemeinsame Ansteuerung der Antennenanordnungen realisiert werden. Zur konkreten Realisierung des Substrats kann vorgesehen sein, dass das Trägerbauteil antennenseitig mit einem geeigneten Antennen-Substrat beschichtet wird, worauf die Antennenanordnungen platziert werden können. Denkbar ist es jedoch auch, wenn eine Leiterplatte verwendet wird, diese Leiterplatte auch in dem Trägerbauteil zu integrieren, beispielsweise die Leiterplatte mit den darauf angeordneten Antennenanordnungen (und bevorzugt auch Radartransceivern realisierenden Halbleiterchips) zu vergießen oder dergleichen.

Zweckmäßigerweise kann das durch die Radarstrahlung zu durchstrahlende Trägerbauteil als ein Radom für die Antennenanordnungen ausgebildet sein. Beispielsweise kann das Trägerbauteil aus Plastik oder einem anderen geeigneten Material gefertigt sein, welches zumindest teilweise eine Formgebung aufweist, durch die ein Radom realisiert werden kann. Zur Realisierung eines Radoms kann selbstverständlich auch vorgesehen werden, das Trägerbauteil aus mehreren unterschiedlichen Materialien herzustellen, insbesondere, wenn das Trägerbauteil, wie noch erläutert werden wird, von außen sichtbar sein soll, um eine einheitliche Oberfläche bei einer inneren, als Radom wirkenden Struktur bereitzustellen.

In einer besonders zweckmäßigen Weiterbildung der vorliegenden Erfindung ist vorgesehen, dass das Trägerbauteil ein eine nach außen sichtbare Sichtseite aufweisendes Verzierungsbauteil ist und die Antennenanordnungen auf einer der Sichtseite gegenüberliegenden Rückseite und/oder innerhalb des Trägerbauteils vorgesehen sind. Mit besonderem Vorteil kann die Sichtseite ein Logo und/oder Emblem eines Herstellers des Kraftfahrzeugs zeigen. Derartige Logo- und Emblembauteile werden häufig zentral vorne oder hinten an dem Kraftfahrzeug vorgesehen und befinden sich mithin in einer Position, die aufgrund ihrer Symmetrie ohnehin einen besonders bevorzugten Ort zum Verbau eines Radarsensors darstellt. Das in diesem Fall strahlungsdurchlässig für Radarstrahlung ausgebildete Trägerbauteil stellt den gewollten definierten, konstanten Abstand zwischen den Antennenanordnungen bereits konstruktiv sicher und bietet zudem, auch als generelles Verzierungsbauteil, eine elegante Art und Weise, einen Radarsensor verdeckt zu verbauen. Beispielsweise kann bei einem bislang aus Metall bestehenden Logo und/oder Emblem nun vorgesehen werden, dass das Logo und/oder Emblem im Material eingearbeitet wird, insbesondere so, dass ein 3D-Effekt erreicht wird. Eine besonders hohe Integration bei einfach vorgebbaren definierten Abständen und sinnvoller, einen verdeckten Verbau darstellender Positionierung der Radaranordnung ist dann gegeben, wenn das als Verzierungsbauteil ausgebildete Trägerbauteil zudem als Radom für die Antennenanordnungen wirkt.

Neben der Radaranordnung betrifft die Erfindung auch ein Kraftfahrzeug, aufweisend wenigstens eine erfindungsgemäße Radaranordnung. Sämtliche Ausführungen bezüglich der Radaranordnung können analog auf das erfindungsgemäße Kraftfahrzeug übertragen werden, mit welchem ebenso die bereits genannten Vorteile erhalten werden können. Mit besonderem Vorteil ist das Trägerbauteil dabei als ein Verzierungsbauteil ausgebildet, insbesondere als ein ein Emblem und/oder Logo tragendes Verzierungsbauteil, und an der Vorderseite und/oder Rückseite des Kraftfahrzeugs mittig angeordnet. Beispielsweise kann die Radaranordnung dann einen Radarsensor für ein Long-Range-Radar, beispielsweise einen ACC-Radarsensor, bilden.

Dabei sei noch darauf hingewiesen, dass es im Rahmen der vorliegenden Erfindung durchaus denkbar ist, wenigstens einen Teil der Steuereinrichtung nicht auf, in oder an dem Trägerbauteil zu realisieren, sondern in einer eigenen Baueinheit, beispielsweise einem Gehäuse, das benachbart und/oder anderweitig nahe dem Trägerbauteil angeordnet werden kann.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: ein erfindungsgemäßes Kraftfahrzeug,
- Fig. 2: eine Vorderseite eines ersten Ausführungsbeispiels eines Trägerbauteils,
- Fig. 3: eine Rückseite eines beispielhaften Trägerbauteils, und
- Fig. 4: eine Rückseite eines ersten Ausführungsbeispiels eines Trägerbauteils.

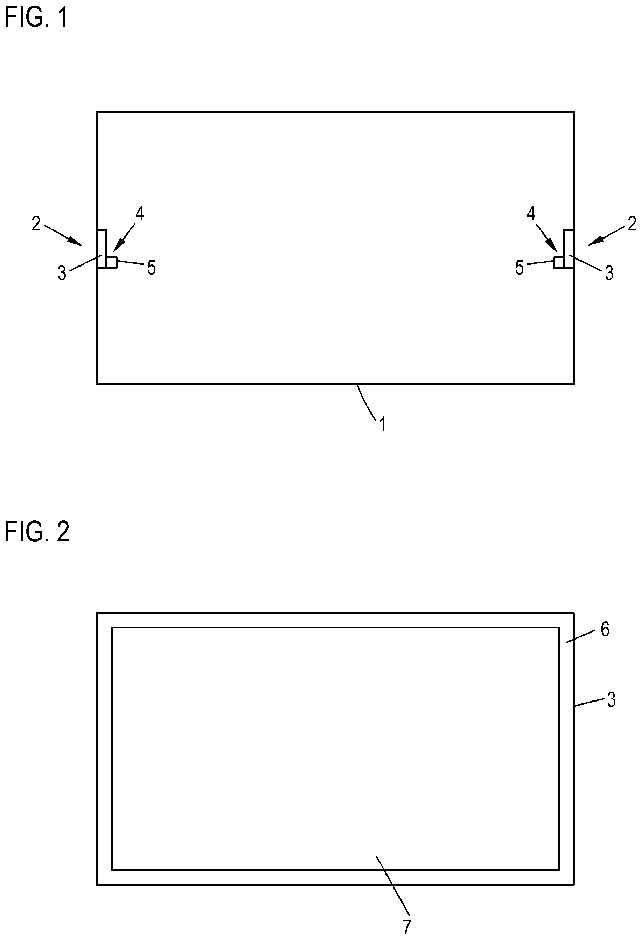

Fig. 1 zeigt eine Prinzipskizze eines erfindungsgemäßen Kraftfahrzeugs 1. Um ein Emblem und/oder Logo des Herstellers des Kraftfahrzeugs 1 zu zeigen, weisen sowohl die Vorderseite des Kraftfahrzeugs 1 als auch die Rückseite des Kraftfahrzeugs 1 mittig ein Verzierungsbauteil 2 auf, das auf einer von außen sichtbaren Sichtseite beziehungsweise Vorderseite das entsprechende Emblem und/oder Logo zeigt, gleichzeitig jedoch als Trägerbauteil 3 jeweils einer Radaranordnung 4 fungiert, mithin, wie im Folgenden näher gezeigt werden wird, wenigstens zwei Antennenanordnungen trägt, die definiert beabstandet sind und über eine hier nur angedeutete Steuereinrichtung 5, die teilweise in einer zu dem Trägerbauteil 3 externen Box angeordnet sein kann, gemeinsam ansteuerbar sind, so dass eine virtuelle Antennenanordnung mit einer vergrößerten, virtuellen Apertur entsteht und somit eine verbesserte Winkelauflösung möglich wird. Die Radaranordnungen 4 beziehungsweise die entsprechenden Verzierungsbauteile 2 sind vorne und hinten jeweils mittig angeordnet, insbesondere von beiden Seiten des Kraftfahrzeugs 1 gleich beabstandet, so dass eine optimale Symmetrie für eine Messung gegeben ist.

Fig. 2 zeigt die Vorderseite beziehungsweise Sichtseite 6 eines Trägerbauteils 3 gemäß einem ersten Ausführungsbeispiel. Ersichtlich umfasst die Sichtseite 6 ein hier nicht näher dargestelltes Emblem 7, das vorliegend durch eine Oberflächenstruktur der Sichtseite 6 derart realisiert ist, dass sich ein 3D-Effekt ergibt. Das Trägerbauteil 3 insgesamt ist strahlungsdurchlässig für Radarstrahlung gestaltet und weist durch Verwendung zweier verschiedener Materialien, insbesondere von Plastikmaterialien, eine innere Formgebung auf, die es ermöglicht, das Trägerbauteil 3 auch als Radom zu nutzen.

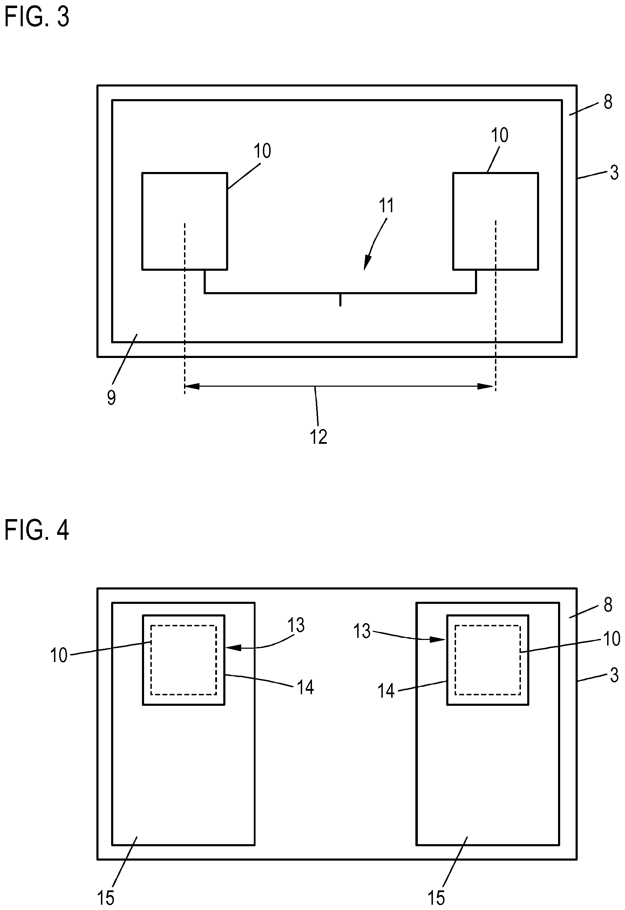

Fig. 3 zeigt die Rückseite 8 eines beispielhaften Trägerbauteils 3. Ersichtlich ist die Rückseite 8 wenigstens teilweise mit einem Substrat 9 beschichtet, auf dem vorliegend zwei Antennenanordnungen 10 sowie hier ebenso nur angedeutete, zur Ansteuerung der Antennenanordnungen 10 geeignete elektrische Leitungen 11 aufgebracht sind. Auch Komponenten der Steuereinrichtung 5 können auf dem Substrat 9 angeordnet sein. Der Abstand 12 zwischen den Antennenanordnungen 10 ist als ein Vielfaches der Wellenlänge der verwendeten Radarstrahlung gewählt, vorliegend als etwa 19,5 cm bei einer Frequenz von 77 GHz.

Durch die gemeinsame, kohärente Ansteuerung der Antennenanordnungen 10 mittels der Steuereinrichtung 5 ist es nun möglich, die Winkelauflösung deutlich zu verbessern, da eine virtuell erweiterte Apertur gegeben ist.

Fig. 4 zeigt die Rückseite 8 eines weiteren Ausführungsbeispiels eines Trägerbauteils 3. Die Antennenanordnungen 10 sind hier als Teil eines Packages 13 in Halbleitertechnologie realisiert, welches zudem einen Halbleiterchip 14 umfasst, durch den wenigstens ein Radartransceiver realisiert ist, insbesondere auch eine digitale Signalverarbeitungskomponente und/oder eine Steuereinheit, die dann Teil der Steuereinrichtung 5 bilden kann. Im Prinzip wird dabei durch jedes der Packages, die vorliegend auf getrennten Leiterplatten 15 gezeigt sind, jedoch auch auf einer gemeinsamen Leiterplatte realisiert sein können, ein eigener Radarsensor realisiert, wobei beim ersten Ausführungsbeispiel gemäß Fig. 3 der Radarsensor durch den steuereinrichtungsseitig vorgesehenen Radartransceiver gebildet wird und beide Antennenanordnungen 10 umfasst.

Es sei noch darauf hingewiesen, dass es insbesondere bei einer Anordnung auf einer gemeinsamen Leiterplatte auch zweckmäßig sein kann, die Leiterplatte mit den aufgebrachten Packages 13 in das Trägerbauteil 3 zu integrieren, beispielsweise durch Vergießen oder dergleichen.

## Patentansprüche

1. Radaranordnung (4) für ein Kraftfahrzeug (1), wobei wenigstens zwei Antennenanordnungen (10) in einem in einer Anordnungsrichtung definierten Abstand (12) auf einem insbesondere für Radarstrahlung durchlässigen Trägerbauteil (3) des Kraftfahrzeugs (1) angeordnet sind und die Radaranordnung (4) eine Steuereinrichtung (5) zum gemeinsamen Sende- und Empfangsbetrieb der wenigstens zwei Antennenanordnungen (10) durch kohärente Ansteuerung derart aufweist, dass diese wie eine einzige virtuelle Antennenanordnung (10) mit vergrößerter Antennenausdehnung in der Anordnungsrichtung wirken, wobei jede Antennenanordnung (10) einem eigenen Radarsensor zugeordnet ist, wobei die Radarsensoren in dem definierten Abstand (12) auf dem Trägerbauteil (3) befestigt sind, wobei die Antennenanordnungen (10) jeweils als Teil eines Halbleiter-Packages (13) realisiert sind, das neben der jeweiligen Antennenanordnung (10) einen Halbleiterchip (14), insbesondere einen CMOS-Chip, umfasst, der jeweils einen Radartransceiver realisiert.

2. Radaranordnung nach Anspruch 1,
**dadurch gekennzeichnet,**
**dass** der definierte Abstand (12) ein ganzzahliges Vielfaches einer Wellenlänge der verwendeten Radarstrahlung beträgt.

3. Radaranordnung nach einem der vorangehenden Ansprüche,
**dadurch gekennzeichnet,**
**dass** die Antennenanordnungen (10) auf einem gemeinsamen Substrat (9) angeordnet sind.

4. Radaranordnung nach Anspruch 3,
**dadurch gekennzeichnet, dass** das Substrat (9) auf einer Seite des Trägerbauteils (3) aufgebracht ist oder eine an einer Seite (8) oder innerhalb des Trägerbauteils (3) befestigte Leiterplatte (15) ist.

5. Radaranordnung nach einem der vorangehenden Ansprüche,
**dadurch gekennzeichnet,**
**dass** das Trägerbauteil (3) als ein Radom für die Antennenanordnungen (10) ausgebildet ist.

6. Radaranordnung nach einem der vorangehenden Ansprüche,
**dadurch gekennzeichnet,**
**dass** das Trägerbauteil (3) ein eine nach außen sichtbare Sichtseite (6) aufweisendes Verzierungsbauteil (2) ist und die Antennenanordnungen (10) auf einer der Sichtseite (6) gegenüberliegenden Rückseite (8) und/oder innerhalb des Trägerbauteils (3) vorgesehen sind.

7. Radaranordnung nach Anspruch 6,
**dadurch gekennzeichnet,**
**dass** die Sichtseite (6) ein Logo und/oder Emblem (7) eines Herstellers des Kraftfahrzeugs (1) zeigt.

8. Kraftfahrzeug (1), aufweisend wenigstens eine Radaranordnung (4) nach einem der vorangehenden Ansprüche.

## Claims

1. Radar arrangement (4) for a motor vehicle (1), wherein at least two antenna arrangements (10) are arranged at a distance (12) defined in an arrangement direction on a carrier component (3), which is permeable in particular to radar radiation, of the motor vehicle (1), and wherein the radar arrangement (4) has a control device (5) for common transmission and reception operation of the at least two antenna arrangements (10) by means of coherent control, such that the two antenna arrangements act as a single virtual antenna arrangement (10) with an increased antenna extension in the arrangement direction, wherein each antenna arrangement (10) is assigned to a separate radar sensor, wherein the radar sensors are fastened to the carrier component (3) at the defined distance (12), wherein the antenna arrangements (10) are each implemented as part of a semiconductor package (13) which comprises, in addition to the respective antenna arrangement (10), a semiconductor chip (14), in particular a CMOS chip, which respectively constitutes a radar transceiver

2. Radar arrangement according to claim 1,
**characterised in that**
the defined distance (12) is an integer multiple of a wavelength of the radar radiation used.

3. Radar arrangement according to any of the preceding claims,
**characterised in that**
the antenna arrangements (10) are arranged on a common substrate (9).

4. Radar arrangement according to claim 3,
**characterised in that**
the substrate (9) is applied to one side of the carrier component (3) or to a circuit board (15) fastened to one side (8) of or inside the carrier component (3).

5. Radar arrangement according to any of the preceding claims,
**characterised in that**
the carrier component (3) is configured as a radome for the antenna arrangements (10).

6. Radar arrangement according to any of the preceding claims,
**characterised in that**
the carrier component (3) is an ornamental component (2) having a visible side (6) that is visible from the outside and the antenna arrangements (10) are arranged on a rear side (8) opposite the visible side (6) and/or inside the carrier component (3).

7. Radar arrangement according to claim 6,
**characterised in that**
the visible side (6) displays a logo and/or an emblem (7) of a manufacturer of the motor vehicle (1).

8. Motor vehicle (1) having a radar arrangement (4) according to any of the preceding claims.

## Revendications

1. Système radar (4) pour un véhicule automobile (1), dans lequel au moins deux systèmes d'antennes (10) sont agencés à une distance (12) définie dans une direction d'agencement sur un élément de support (3) du véhicule automobile (1) en particulier perméable au rayonnement radar, et le système radar (4) présente un moyen de commande (5) permettant un mode émission et réception commun des au moins deux systèmes d'antennes (10) par adressage cohérent, de telle sorte que ceux-ci agissent en tant qu'unique système d'antennes (10) virtuel présentant une étendue d'antenne plus grande dans la direction d'agencement, chaque système d'antennes (10) étant équipé d'un propre capteur de radar, dans lequel les capteurs de radar sont fixés à la distance définie (12) sur l'élément support (3), dans lequel les systèmes d'antennes (10) sont réalisés respectivement comme une partie d'un ensemble de semiconducteurs (13) qui comprend parallèlement au système d'antennes respectif (10) une puce semiconductrice (14), en particulier une puce CMOS, qui réalise respectivement un émetteur-récepteur radar.

2. Système radar selon la revendication 1,
**caractérisé en ce que**
la distance définie (12) représente un multiple entier d'une longueur d'onde du rayonnement radar utilisé.

3. Système radar selon l'une quelconque des revendications précédentes,
**caractérisé en ce que**
les systèmes d'antennes (10) sont agencés sur un substrat commun (9).

4. Système radar selon la revendication 3,
**caractérisé en ce que**
le substrat (9) est appliqué sur une face de l'élément support (3) ou est un circuit imprimé (15) fixé contre une face (8) ou à l'intérieur de l'élément support (3).

5. Système radar selon l'une quelconque des revendications précédentes,
**caractérisé en ce que**
l'élément support (3) est conçu sous forme de radôme pour les systèmes d'antennes (10).

6. Système radar selon l'une quelconque des revendications précédentes,
**caractérisé en ce que**
l'élément support (3) est un élément décoratif (2) comportant une face apparente (6) visible de l'extérieur et les systèmes d'antennes (10) sont prévus sur une face arrière (8) opposée à la face apparente (6) et/ou à l'intérieur de l'élément support (3).

7. Système radar selon la revendication 6,
**caractérisé en ce que**
la face apparente (6) fait apparaître un logo et/ou sigle (7) d'un fabricant du véhicule automobile (1).

8. Véhicule automobile (1) comportant au moins un système radar (4) selon l'une des revendications précédentes.
